# FASCICULE DE BREVET EUROPEEN

(11) **EP 0 809 430 B1**
(45) Date de publication et mention de la délivrance du brevet: **07.04.1999**
(21) Numéro de dépôt: 96903075.8
(22) Date de dépôt: 08.02.1996
(51) Int. Cl.: A01G 9/12

(54) **CONTENEUR, EN PARTICULIER TUTEUR POUR PLANTES**
BEHÄLTER, INSBESONDERE PFLANZENSTÜTZE
CONTAINER, IN PARTICULAR FOR STAKING PLANTS

(30) Priorité: 13.02.1995 FR 9501612
(43) Date de publication de la demande: 03.12.1997
(73) Titulaire: Chanet, Guy François, 73190 Saint-Jeoire (FR)
(72) Inventeur: Bal, Patrick François, 38330 Saint-Ismier (FR); Chanet, Guy François, 73190 Saint-Jeoire (FR)
(74) Mandataire: Casalonga, Axel
(86) Numéro de dépôt international: FR9600213
(87) Numéro de publication internationale: WO9625033

(56) Documents cités:
- EP-A- 0 317 713
- EP-A- 0 358 565
- DE-A- 3 400 838
- DE-B- 2 533 065
- DE-U- 8 631 101
- GB-A- 1 452 430
- US-A- 5 179 799

## Description

La présente invention concerne un conteneur susceptible de constituer avantageusement un tuteur pour plantes adapté pour envelopper périphériquement la plante notamment lorsque cette dernière est dans un pot.

Un conteneur correspondant au préambule de la revendication 1 est connu du document DE-U-8631101

Le conteneur selon l'invention comprend au moins deux éléments annulaires coaxiaux reliés entre eux par des bras articulés sur ces éléments, de telle sorte que lesdits éléments sont déplaçables coaxialement l'un par rapport à l'autre entre une position repliée dans laquelle ils sont au voisinage l'un de l'autre et une position dépliée dans laquelle ils sont éloignés l'un de l'autre, en même temps que lesdits bras changent d'orientation.

Dans une exécution de l'invention, lesdits bras comprennent au moins une partie et le déplacement axial desdits éléments se produit par pivotement ou basculement desdits bras et rotation desdits éléments l'un par rapport à l'autre.

Dans une autre exécution de l'invention, lesdits bras comprennent au moins deux parties articulées entre elles et le déplacement axial desdits éléments l'un par rapport à l'autre se produit par pivotement ou basculement desdits bras et translation desdits éléments.

Selon l'invention, les parties précitées desdits bras sont de préférence reliées par des parties de liaison déformables constituant des articulations.

Selon une exécution préférée de l'invention, lesdits éléments et lesdits bras sont en une seule pièce et lesdits bras et lesdits éléments sont reliés par des parties de liaison déformables constituant des articulations.

Selon l'invention, lesdits éléments et lesdits bras présentent de préférence des parties de maintien réciproques qui coopèrent lorsque lesdits éléments sont amenés dans la position dépliée précitée.

Selon l'invention, les parties desdits bras présentent de préférence des parties de maintien réciproques qui coopèrent lorsque lesdits éléments sont amenés dans la position dépliée précitée.

Selon l'invention, lesdites parties de maintien comprennent de préférence des parties en saillie ou bossages qui sont formés sur lesdits éléments et/ou lesdits bras.

Selon l'invention, lesdites parties de maintien comprennent de préférence des parties en saillie ou bossages qui sont formés sur au moins l'une desdites parties desdits bras.

Selon une exécution préférée de l'invention, lesdits éléments et lesdits bras et/ou lesdites parties desdits bras sont respectivement reliés par des axes d'articulation qui s'étendent parallèlement aux plans desdits éléments et perpendiculairement à ces éléments et comprennent respectivement, dans le voisinage desdits axes d'articulation, des parties en saillie qui s'étendent parallèlement aux plans desdits éléments et qui passent à force l'une sur l'autre lorsque lesdits éléments et lesdits bras et/ou lesdites parties desdits bras passent de leur position repliée à leur position dépliée et/ou réciproquement, lesdites parties en saillie constituant des parties de maintien.

Selon une variante de l'invention, lesdites parties en saillie sont respectivement formées perpendiculairement auxdits axes d'articulation.

Selon une autre variante de l'invention, lesdites parties en saillie sont respectivement formées parallèlement auxdits axes d'articulation.

Selon une exécution préférée de l'invention, lesdits éléments sont disposés autour et à distance l'un de l'autre et lesdits bras s'étendent entre ces éléments.

Selon une exécution préférée de l'invention, lesdits éléments et lesdits bras s'étendent, en position repliée, sensiblement dans un même plan.

Selon une exécution de l'invention, l'un des éléments comprend des parties permettant son accouplement à la paroi périphérique d'un pot.

Selon l'invention, lesdites parties d'accouplement comprennent de préférence des parties déformables vers l'extérieur.

Selon une autre exécution de l'invention, l'un desdits éléments est partie intégrante de la paroi périphérique d'un pot.

Selon une exécution préférée de l'invention, le conteneur est formé de telle sorte qu'il peut être obtenu par moulage lorsqu'il se trouve en position repliée.

La présente invention sera mieux comprise à l'étude de conteneurs constituant des tuteurs pour plantes, décrits à titre d'exemples non limitatifs et illustrés par le dessin sur lequel :
- la figure 1 représente une vue en élévation et en position dépliée d'un conteneur selon l'invention, monté sur un pot ;
- la figure 2 représente une vue de dessus en position repliée du conteneur de la figure 1 ;
- la figure 3 représente une vue agrandie d'une articulation du conteneur de la figure 1, en position repliée ;
- la figure 4 représente une vue agrandie en coupe d'une articulation du conteneur de la figure 1, en position dépliée ;
- la figure 5 représente une vue de dessus d'une variante de réalisation d'une articulation du conteneur de la figure 1, en position repliée ;
- la figure 6 représente une vue en élévation et en position dépliée d'un second conteneur selon l'invention, monté sur un pot ;
- la figure 7 représente une vue de dessus du conteneur de la figure 2, en position repliée, ;
- la figure 8 représente une coupe d'une articulation du conteneur de la figure 6, en position dépliée ;
- la figure 9 représente une coupe transversale d'un troisième conteneur selon l'invention, associé à un pot, en position dépliée ;
- la figure 10 représente une vue de dessus du conteneur de la figure 9, en position repliée ;
- la figure 11 représente une vue agrandie d'une articulation du conteneur de la figure 9, en position dépliée ;
- la figure 12 représente une vue de dessus d'une variante de réalisation d'une articulation du conteneur précité, en position repliée ; ;
- et la figure 13 représente une coupe verticale de l'articulation de la figure 12, en position dépliée.

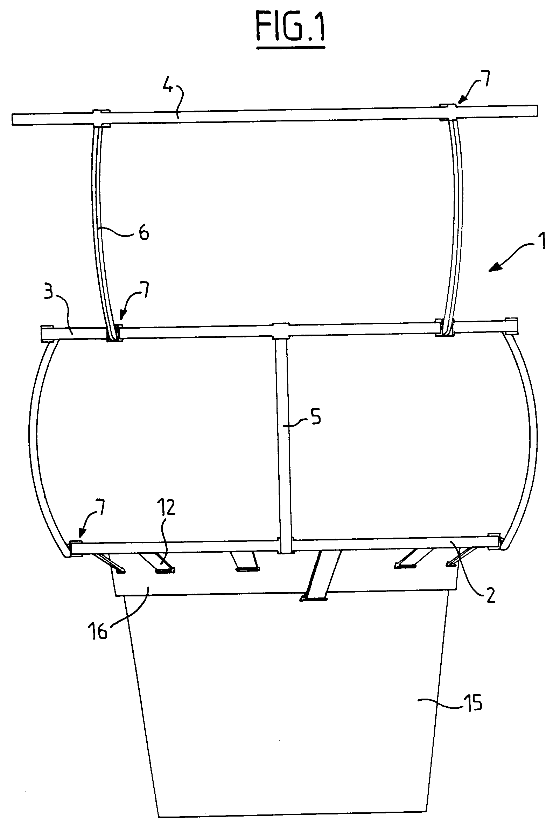

En se reportant aux figures 1 à 4, on voit qu'on a représenté un conteneur répéré d'une manière générale par la référence 1 qui comprend trois anneaux circulaires coaxiaux, à savoir un anneau inférieur 2, un anneau intermédiaire 3 et un anneau supérieur 4, ces anneaux étant sensiblement de section carrée. Les anneaux 2 et 3 sont reliés par quatre bras 5 régulièrement répartis à leur périphérie et les anneaux 3 et 4 sont reliés par quatre bras 6 régulièrement répartis à leur périphérie, ces bras étant de section sensiblement carrée. Les extrémités des bras 5 et les extrémités des bras 6 sont respectivement reliées aux anneaux 2 et 3 et aux anneaux 3 et 4 par l'intermédiaire d'articulations à moyens de maintien, toutes identiques, repérées d'une manière générale par la référence 7.

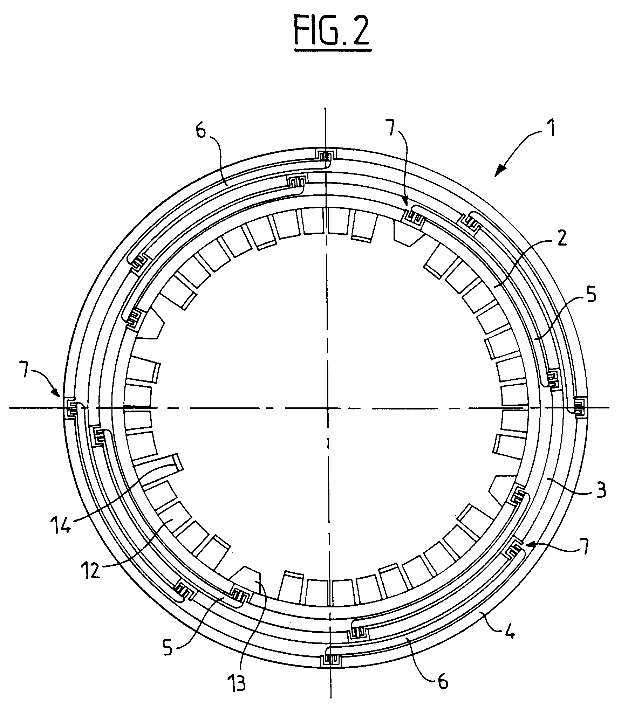

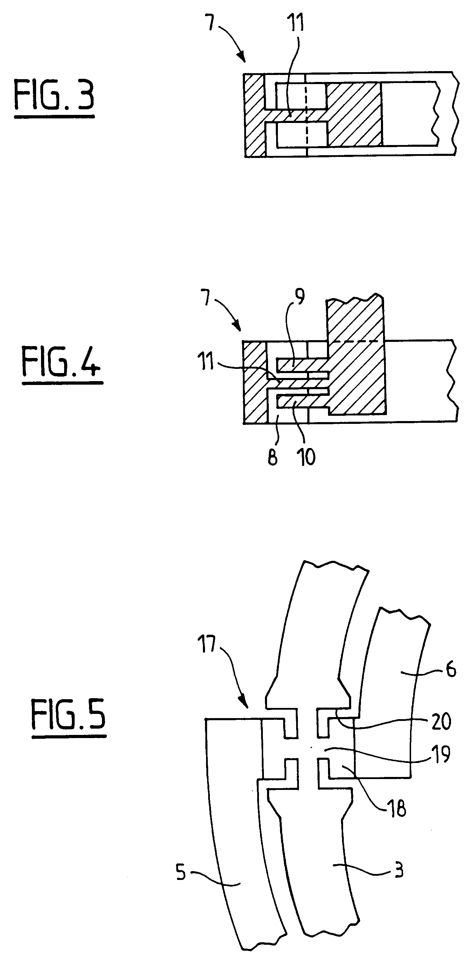

En se reportant en particulier aux figures 2 et 3, on va maintenant décrire la disposition du conteneur 1 en position repliée ou à plat.

Dans cette position repliée, les anneaux 2, 3 et 4 s'étendent dans un même plan, l'anneau 3 s'étendant entre et à distance de l'anneau inférieur 2 disposé intérieurement et l'anneau supérieur 4 disposé extérieurement.

Les bras 5 s'étendent entre l'anneau 2 et l'anneau 3 et sont allongés en forme d'arcs de cercle et les bras 6 s'étendent entre l'anneau 3 et l'anneau 4 et sont allongés en forme d'arcs de cercle, les bras 5 étant dans l'exemple à faible distance des anneaux 2 et 3 et les bras 6 étant dans l'exemple à faible distance des anneaux 3 et 4.

Les articulations 7 comprennent des échancrures 8 ménagées respectivement dans les anneaux 2, 3 et 4, dans lesquelles pénètrent des parties en saillie 9 et 10 formées aux extrémités des bras 5 et 6 correspondants.

Dans le plan des anneaux 2, 3 et 4, les échancrures 8 sont en forme de U et leurs parois sont perpendiculaires à ce plan. Les parties en saillie 8 et 9 sont de section rectangulaire et sont à distance l'une de l'autre et à distance des parois des échancrures, et leurs parois sont également perpendiculaires à ce plan.

Entre les parties en saillie 9 et 10 des bras 5 et 6, les articulations 8 présentent des axes radiaux 11 qui relient respectivement les bras 5 et 6 aux fonds des échancrures 8 des anneaux 2, 3 et 4.

Par ailleurs, l'anneau inférieur 2 présente, sur son côté intérieur, une multiplicité de languettes 12 qui s'étendent vers l'intérieur ainsi que quatre languettes 13 disposées à 90° les unes par rapport aux autres, certaines languettes 12 plus longues présentant à leurs extrémités une partie ou crochet en saillie 14.

Le conteneur 1 qui vient d'être décrit peut être fabriqué en une seule pièce, par exemple en une matière plastique, lorsqu'il est dans sa position repliée à plat comme le montrent les figures 2 et 3, dans un moule à gauffre et entre les deux parties de ce moule. En effet, en position repliée ou à plat, toutes ses parois sont démoulables.

Le conteneur 1 ainsi fabriqué peut être monté sur le bord périphérique d'un pot 15 à plantes de la manière suivante.

On enfile un pot rond 15, par sa partie inférieure, dans l'anneau inférieur 2 et on le fait glisser jusqu'à ce que les languettes 13 passent au-dessus du bord du pot, les languettes 12 prenant alors appui contre la paroi périphérique du pot 15 et les crochets 14 de certaines des languettes 12 restant en prise en-dessous du rebord en saillie 16 du pot 15. Le conteneur 1 se trouve ainsi convenablement maintenu sur le pot 15.

Ensuite, on déplace axialement vers le haut l'anneau intermédiaire 3 et l'anneau supérieur 4 jusqu'à amener les bras 5 et 6 sensiblement verticalement. Cette opération s'effectue par rotation des anneaux 2, 3 et 4 les uns par rapport aux autres dans le sens qui relève les bras 5 et 6, et par pivotement des bras 5 et 6 par rapport aux anneaux 2, 3 et 4 qui les portent par déformation des axes d'articulation 11 des articulations 7.

Lors des mouvements ci-dessus, les parties en saillie 9 et 10 des articulations 7 des bras 5 et 6 viennent heurter les faces opposées des échancrures 8 des anneaux 2, 3 et 4 et se déforment pour en fin de course être amenées dans le plan des anneaux 2, 3 et 4 comme le montre la figure 4. Dans cette position, les bords opposés des parties en saillie 9 et 10 viennent en appui contre les parois opposées des échancrures 8 et maintiennent le conteneur 1 dans sa position dépliée représentée sur la figure 1.

L'anneau intermédiaire 3 étant ainsi à distance au-dessus du bord supérieur du pot 15, cette distance étant déterminée par la longueur des bras 5, et l'anneau supérieur 4 étant ainsi à distance au-dessus de l'anneau intermédiaire 3, cette distance déterminée par la longueur des bras 6, les anneaux 3 et 4 et les bras 5 et 6 déterminent un volume à l'intérieur duquel peut être maintenue la plante portée par le pot 5, et en particulier la partie périphérique inférieure de cette plante.

De préférence, le conteneur 1 est installé sur un pot 15 contenant déjà une plante. Ainsi, le conteneur 1 peut constituer un moyen permettant de réduire la dimension périphérique d'une plante et de la préserver et peut être en outre utilisé pour son transport en prenant l'un des anneaux 3 ou 4. Grâce à ses languettes 13, le conteneur 1 peut être installé sur des pots 15 de diamètres différents.

Dans la mesure où les axes d'articulation 11 des articulations 7 sont suffisamment solides, le conteneur 1 peut être replié et éventuellement réutilisé.

Le conteneur 1 qui vient d'être décrit présente par ailleurs l'avantage de pouvoir être facilement fabriqué par moulage comme on l'a décrit précédemment et peut être stocké avant utilisation en position repliée à plat en occupant un volume considérablement réduit par rapport à son volume en position dépliée.

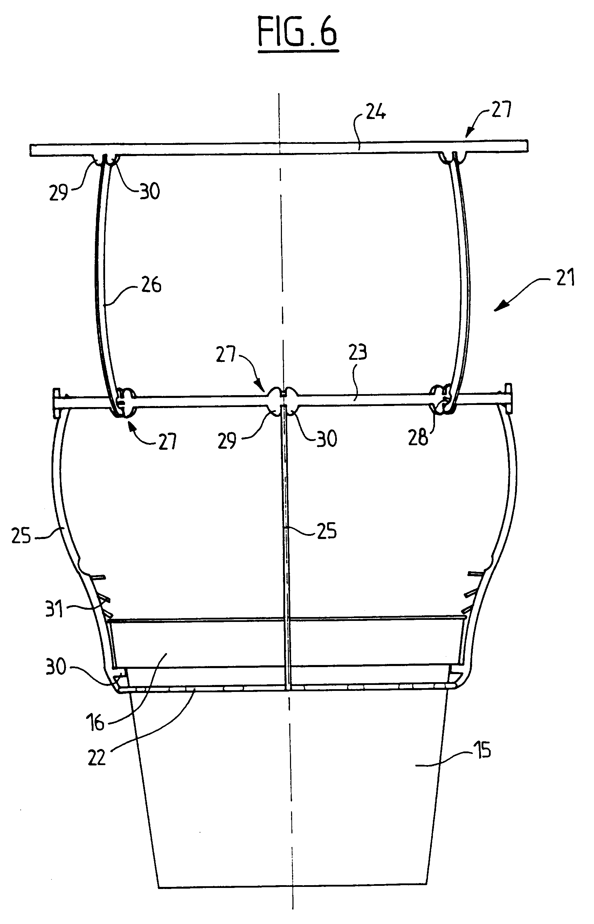

En se reportant maintenant à la figure 5, on voit qu'on a représenté une articulation 17 susceptible de remplacer les articulations 7 décrites précédemment.

Dans cette articulation 17, les parties en saillie 9 et 10 prévues précédemment sont remplacées par des bossages de section carrée 18 prévus en saillie sur les extrémités des bras 5 et 6 des axes d'articulation 19 remplaçant les axes d'articulation 11 précédents étant formés entre le fond d'échancrures en U 20 formées dans les anneaux 2, 3 et 4 et la face avant des bossages 18. Les bossages 18 sont dimensionnés de telle sorte que leurs coins heurtent et franchissent les faces opposées des échancrures 20 pour se disposer au-delà lorsque les bras sont amenés verticalement en position dépliée.

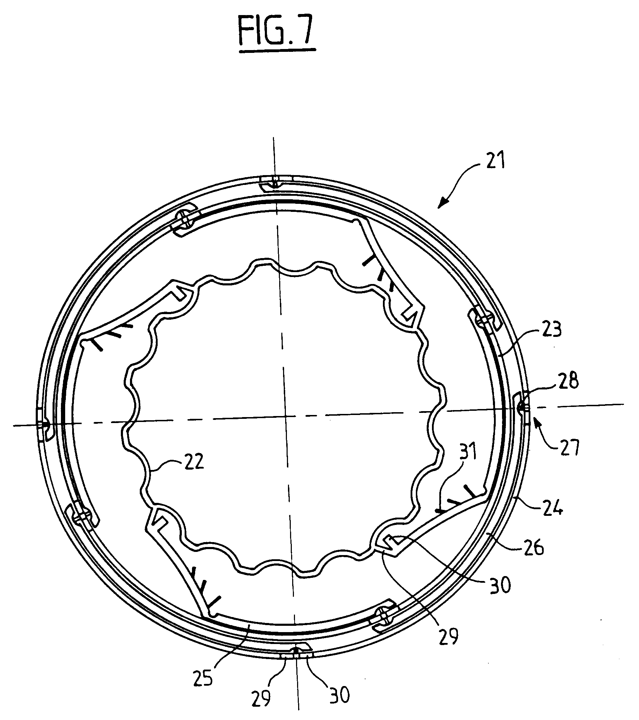

En se reportant aux figures 6 à 8, on va maintenant décrire un conteneur repéré d'une manière par la référence 21 qui se distingue du conteneur 1 décrit précédemment principalement par la structure de ses articulations mais qui peut être fabriqué en position repliée à plat comme le montre la figure 7 et utilisé de la même manière.

Ce conteneur 21 comprend un anneau inférieur 22 ondulé destiné à envelopper la périphérie d'un pot 15 en s'adaptant à sa dimension, un anneau circulaire intermédiaire 23 et un anneau circulaire supérieur 24 ainsi que quatre bras 25 qui relient l'anneau 22 et l'anneau 23 et quatre bras 26 qui relient l'anneau intermédiaire 23 et l'anneau supérieur 24.

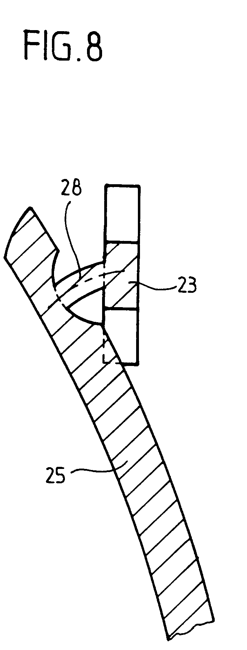

Dans cet exemple, les articulations 27 reliant respectivement les bras 25 et 26 aux anneaux 23 et 24 comprennent simplement des axes d'articulation radiaux 28 et les anneaux 23 et 24 présentent des bossages 29 et 30 qui s'étendent perpendiculairement à leur plan et entre lesquels les bras 25 et 26 sont susceptibles de s'engager après les avoir franchis comme le montrent les figures 6 et 8 lorsqu'ils sont amenés en position dépliée, et celà du fait de la courbure des bras 25 et 26.

Par ailleurs, les bras 25 sont reliés à l'anneau inférieur 22 par l'intermédiaire d'axes d'articulation 29 et présentent des bossages 30 destinés à venir en appui en dessous de la partie périphérique en saillie 16 du pot 15 lorsqu'ils sont amenés en position dépliée, ces bras 25 présentant en outre des bossages ou languettes 31 destinés à s'engager au-dessus du bord supérieur du pot 15 lorsque le conteneur 21 est à sa position dépliée, comme le montre la figure 6.

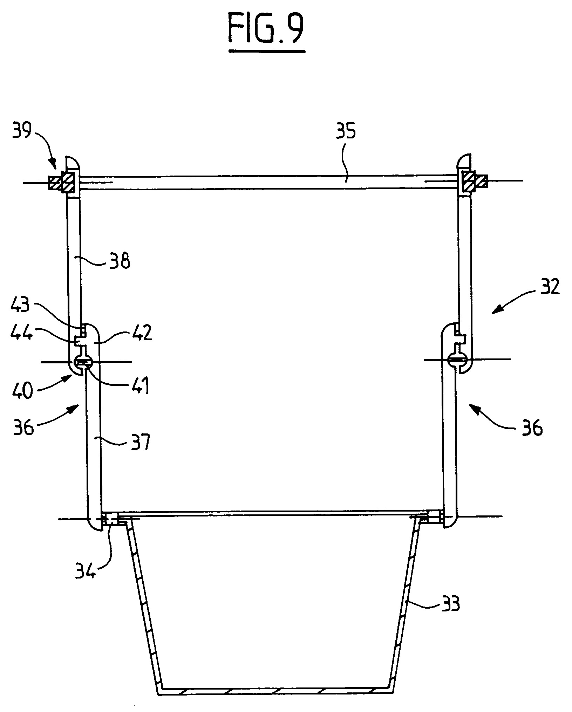

En se reportant aux figures 9 à 11, on va maintenant décrire un conteneur repéré d'une manière générale par la référence 32 qui est prévu à demeure sur un pot ou bac rectangulaire 33 qui présente un rebord périphérique en saillie 34.

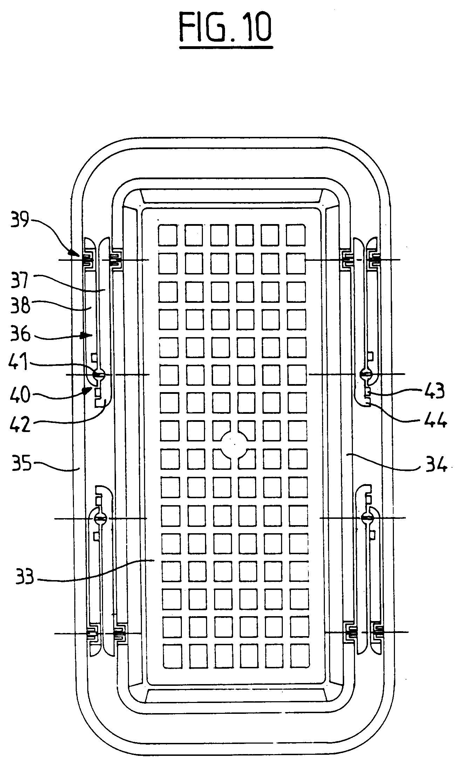

Le conteneur 32 comprend un anneau rectangulaire 35 qui, en position repliée, comme le montre la figure 10, s'étend autour et à distance du rebord périphérique 34 du pot 33 et dans le même plan, ainsi que quatre bras 36 qui relient ce rebord 34 et cet anneau 35.

Dans cet exemple, les bras 36 comprennent deux parties 37 et 38 qui, en position repliée comme le montre la figure 10, s'étendent entre le rebord 34 du pot 33 et l'anneau 35, l'une à côté de l'autre et à distance, et dans le même plan que ce rebord 34 et cet anneau 35.

L'une des extrémités de la partie 37 des bras 36 et l'une des extrémités de la partie 38 des bras 36 sont reliées respectivement au rebord 34 du pot 33 et à l'anneau 35 par l'intermédiaire d'articulations 39 de structures identiques ou symétriques aux articulations 7 du conteneur 1 décrit en référence aux figures 1 à 4.

Les autres extrémités des parties 37 et 38 des bras 36 sont reliées entre elles par l'intermédiaire d'articulations repérées d'une manière générale par la référence 40.

Ces articulations 40 comprennent des axes d'articulation 41 et les parties 37 des bras 36 présentent des prolongements 42 qui vont au-delà des axes d'articulation 41 et qui présentent des bossages 43 et 44 situés du côté des parties 38 des parties 36 et décalés dans le sens longitudinal des parties 37.

Dans l'exemple représenté, les bras 36 sont prévus deux sur l'un des côtés les plus longs de l'anneau 35 et deux de l'autre côté.

Comme les conteneurs des exemples précédents, le conteneur 32 ainsi constitué peut être fabriqué en une seule pièce par moulage en position repliée à plat comme le montre la figure 10, en même temps que le pot 33, le conteneur 32 et le pot 15 étant en matière plastique.

Pour déplier le conteneur 32 au-dessus du pot 33, en particulier lorsque les plantes qui sont dans le pot 33 sont grandes, il suffit de déplacer vers le haut l'anneau 35. Ce faisant les parties 37 et 38 des bras 36 s'ouvrent jusqu'à venir en alignement, en pivotant par déformation des axes d'articulation des articulations 39 reliant les parties 37 et 38 des bras 36 au rebord 34 du pot 33 et à l'anneau 35 et par déformation des axes 41 des articulations 40 reliant les parties 37 et 38 des bras 36.

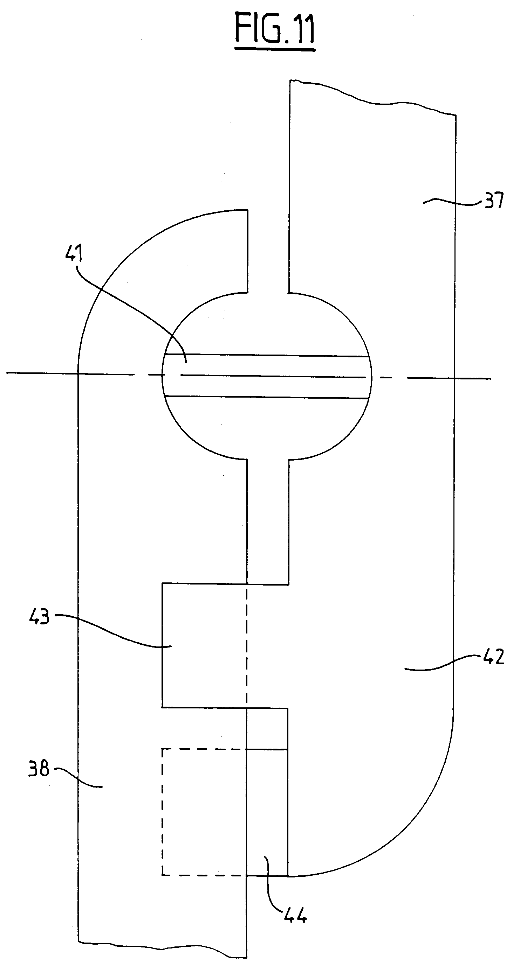

Arrivées en position repliée, les articulations 37 maintiennent, comme dans l'exemple décrit en référence aux figures 1 à 4, les bras 36 par rapport au rebord 34 du pot 33 et par rapport à l'anneau 35 et les deux parties 37 et 38 des bras 36 sont maintenues les unes par rapport aux autres grâce au fait que les parties 37 des bras 36 viennent en prise entre les bossages 43 et 44 des prolongements 42 des parties 37 des bras 36 comme le montre la figure 11.

Amené en position dépliée comme le montre la figure 9, le conteneur 32 présente les mêmes avantages que les conteneurs décrits dans les exemples précédents.

Bien entendu, le conteneur 32 pourrait être indépendant du pot 34 et pourrait comprendre un anneau inférieur relié aux bras 36 et cet anneau inférieur pourrait comprendre, comme les exemples précédents, des moyens pour sa fixation sur un pot rectangulaire.

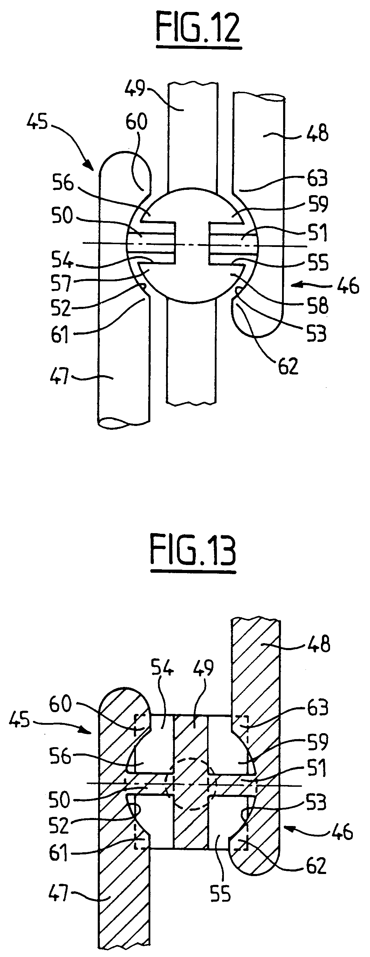

En se reportant maintenant aux figures 12 et 13, on voit qu'on a représenté deux articulations opposées 45 et 46 de deux bras opposés 47 et 48 sur un anneau 49, constituant une autre variante des articulations décrites précédemment, cet anneau 49 et ces bras 47 et 48 correspondant par exemple à l'anneau 3 et aux deux bras 5 et 6 de l'exemple décrit en référence à la figure 1.

Les bras 47 et 48 s'étendent, en position repliée, de part et d'autre de l'anneau 49 et s'étendent, en position dépliée, l'un vers le haut et l'autre vers le bas l'un.

Les articulations 45 et 46 comprennent deux axes radiaux opposés 50 et 51 qui relient respectivement les fonds de deux gorges latérales 52 et 53 des bras 17 et 48 aux fonds de deux gorges latérales opposées 54 et 55 de l'anneau 49.

De part de d'autre de chacune de ses gorges opposées 54 et 55, l'anneau présente, latéralement à l'intérieur et à l'extérieur, des parties en saillie ou bossages 56, 57 et 58, 59 qui s'étendent verticalement et les bords des gorges 52 et 53 situés de part et d'autre des axes 50 et 51, situés à distance dans le sens des bras 47 et 48, constituent des parties en saillie ou bossages 60, 61 et 62, 63.

En position repliée représentée sur la figure 12, qui correspond à la position de fabrication par moulage par injection, les parties en saillie 56 et 57 de l'anneau 49 rentrent à l'intérieur de la gorge 52 du bras 47, les parties en saillie 60 et 61 du bras 47 étant à l'extérieur des parties en saillie 56 et 57 de l'anneau 49 dans le sens périphérique de ce dernier, et les parties en saillie 58 et 59 de l'anneau 49 rentrent à l'intérieur de la gorge 53 du bras 48, les parties en saillie 62 et 63 du bras 47 étant à l'extérieur des parties en saillie 58 et 59 de l'anneau 49 dans le sens périphérique de ce dernier.

En position dépliée représentée sur la figure 13, les parties en saillie 60 et 61 du bras 47 rentrent à l'intérieur de la gorge 54 de l'anneau 49, de part et d'autre de l'axe 50 et les parties en saillie 62 et 63 du bras 48 rentrent à l'intérieur de la gorge 55 de l'anneau 49, de part et d'autre de l'axe 51. Les bras 47 et 48 sont ainsi maintenus en position dépliée, leurs parties en saillie 60, 61 et 62, 63 étant respectivement prises entre les parties en saillie 56, 57 et 58, 59 de l'anneau 49.

Lorsque le bras 47 passe de sa position repliée à sa position dépliée ou réciproquement, les parties en saillie 60 et 61 de ce bras passent à force au dessus des parties en saillie 56 et 57 de l'anneau 49, notamment en déformant ce bras, l'axe d'articulation 50 se tordant. Lorsque le bras 48 passe de sa position repliée à sa position dépliée, les parties en saillie 62 et 63 de ce bras passent à force au dessus des parties en saillie 58 et 59 de l'anneau 49, notamment en déformant ce bras, l'axe d'articulation 51 se tordant.

Bien entendu, si un anneau 49 d'un conteneur tel que l'un de ceux précédemment décrits n'est relié, en un endroit, qu'à un seul bras 47 ou 48; une seule articulation 45 ou 46 serait à prévoir.

La présente invention ne se limite pas aux exemples ci-dessus décrits. Bien des variantes de réalisation sont possibles sans sortir du cadre défini par les revendications annexées.

## Revendications

1. Conteneur, en particulier tuteur pour plantes, comprenant au moins deux éléments annulaires coaxiaux (2, 3) reliés entre eux par des bras (5), caractérisé en ce que les bras sont articulés sur ces éléments, de telle sorte que lesdits éléments sont déplaçables coaxialement l'un par rapport à l'autre entre une position repliée dans laquelle ils sont au voisinage l'un de l'autre et une position dépliée dans laquelle ils sont éloignés l'un de l'autre, en même temps que lesdits bras changent d'orientation.

2. Conteneur selon la revendication 1, caractérisé par le fait que lesdits bras (5) comprennent au moins une partie et que le déplacement axial desdits éléments (2, 3) se produit par pivotement desdits bras et rotation desdits éléments l'un par rapport à l'autre.

3. Conteneur selon la revendication 1, caractérisé par le fait que lesdits bras (36) comprennent au moins deux parties (37, 38) articulées entre elles et que le déplacement axial desdits éléments (34, 35) l'un par rapport à l'autre se produit par pivotement desdits bras et translation desdits éléments.

4. Conteneur selon la revendication 3, caractérisé par le fait que les parties précitées desdits bras sont reliées par des parties de liaison déformables (41) constituant des articulations.

5. Conteneur selon l'une quelconque des revendications précédentes, caractérisé par le fait que lesdits éléments et lesdits bras sont en une seule pièce et que lesdits bras et lesdits éléments sont reliés par des parties de liaison déformables constituant des articulations (7, 39, 41).

6. Conteneur selon l'une quelconque des revendications précédentes, caractérisé par le fait que lesdits éléments et lesdits bras présentent des parties de maintien reciproques (9, 29) qui coopèrent lorsque lesdits éléments sont amenés dans la position dépliée précitée.

7. Conteneur selon l'une quelconque des revendications 3 à 6, caractérisé par le fait que les parties desdits bras (36) présentent des parties de maintien réciproques (43) qui coopèrent lorsque lesdits éléments sont amenés dans la position dépliée précitée.

8. Conteneur selon l'une des revendications 6 ou 7, caractérisé par le fait que lesdites parties de maintien comprennent des parties en saillie ou bossages (9, 29, 43) qui sont formés sur lesdits éléments et/ou lesdits bras.

9. Conteneur selon la revendication 7, caractérisé par le fait que lesdites parties de maintien comprennent des parties en saillie ou bossages (43) qui sont formés sur au moins l'une desdites parties desdits bras.

10. Conteneur selon l'une quelconque des revendications 3 à 9, caractérisé par le fait que lesdits éléments et lesdits bras et/ou lesdites parties desdits bras sont respectivement reliés par des axes d'articulation (11, 19, 41, 50) qui s'étendent parallèlement aux plans desdits éléments et perpendiculairement à ces éléments et comprennent respectivement, dans le voisinage desdits axes d'articulation, des parties en saillie (8, 9 ; 26, 29 ; 37, 43 ; 56, 60) qui s'étendent parallèlement aux plans desdits éléments et qui passent à force l'une sur l'autre lorsque lesdits éléments et lesdits bras et/ou lesdites parties desdits bras passent de leur position repliée à leur position dépliée et/ou réciproquement, lesdites parties en saillie constituant des parties de maintien.

11. Conteneur selon la revendication 10, caractérisé par le fait que lesdites parties en saillie (8, 9 ; 18, 20) sont respectivement formées perpendiculairement auxdits axes d'articulation.

12. Conteneur selon la revendication 10, caractérisé par le fait que lesdites parties en saillie (26, 29 ; 37, 43 ; 56, 60) sont respectivement formées parallèlement auxdits axes d'articulation.

13. Conteneur selon l'une quelconque des revendications précédentes, caractérisé par le fait que lesdits éléments (2, 3) sont disposés autour et à distance l'un de l'autre et que lesdits bras (5) s'étendent entre ces éléments.

14. Conteneur selon l'une quelconque des revendications précédentes, caractérisé par le fait qu'en position repliée, lesdits éléments et lesdits bras s'étendent sensiblement dans un même plan.

15. Conteneur selon l'une quelconque des revendications précédentes, caractérisé par le fait que l'un des éléments comprend des parties (12) permettant son accouplement à la paroi périphérique d'un pot.

16. Conteneur selon la revendication 15, caractérisé par le fait que lesdites parties d'accouplement comprennent des parties (12) déformables vers l'extérieur.

17. Conteneur selon l'une quelconque des revendications 1 à 12, caractérisé par le fait que l'un desdits éléments (34) est partie intégrante de la paroi périphérique d'un pot.

18. Conteneur selon l'une quelconque des revendications précédentes, caractérisé par le fait qu'il est formé de telle sorte qu'il peut être obtenu par moulage lorsqu'il se trouve en position repliée.

## Claims

1. Container, in particular for staking plants, comprising at least two coaxial annular member (2,3) connected together by arms (5) characterized in that said arms are hinged to the members so that said members can be displaced coaxially relative to each other between a folded position in which they are near each other at the same time as said arms change their orientation, and an extended position in which they are far from each other.

2. Container according to claim 1 characterized in that said arms (5) comprise at least one part and the axial displacement of said members (2,3) is produced by pivoting or tilting of said arms and rotation of said members relative to each other.

3. Container according to claim 1 characterized in that said arms (36) comprise at least two parts (37,38) hinged to each other and the axial displacement of said members (34,35) relative to each other is produced by pivoting or tilting of said arms and translation of said members.

4. Container according to claim 3 characterized in that the aforementioned parts of said arms are connected by deformable connecting parts (41) constituting hinges.

5. Container according to any one of the preceding claims characterized in that said members and said arms are in one piece and said arms and said members are connected by deformable connecting parts constituting hinges (7,39,41).

6. Container according to any one of the preceding claims characterized in that said members and said arms have reciprocal holding parts (9,29) that cooperate when said members are moved into the aforementioned extended position.

7. Container according to any one of claims 3 to 6 characterized in that the parts of said arms (36) have reciprocal holding parts (43) that cooperate when said members are moved into the aforementioned extended position.

8. Container according to one of claims 6 or 7 characterized in that said holding parts comprise projecting parts or bosses (9,29,43) which are formed on said members and/or said arms.

9. Container according to claim 7 characterized in that said holding parts comprise projecting parts or bosses (43) which are formed on at least one of said parts of said arms.

10. Container according to any one of claims 3 to 9 characterized in that said members and said arms and/or said parts of said arms are respectively connected by hinge pins (11,19,41,50) that extend parallel to the planes of said members and perpendicularly to said members and respectively comprise, in the vicinity of said hinge pins, projecting parts (6,9;26,29;37,43; 56,60) that extend parallel to the planes of said members and which are forced one over the other when said members and said arms and/or said parts of said arms move from their folded position to their extended position and/or vice versa, said projecting parts constituting holding parts.

11. Container according to claim 10, characterized in thar said projecting parts (8,9;18,20) are respectively formed perpendicularly to said hinge pins.

12. Container according to claim 10, characterized in that said projecting parts (26,29;37,43;56,60) are respectively formed parallel to said hinge pins.

13. Container according to any one of the preceding claims characterized in that said members (2,3) are disposed around and at a distance from each other and said arms (5) extend between these members.

14. Container according to any one of the preceding claims characterized in that said members and said arms extend in substantially the same plane in the folded position.

15. Container according to any one of the preceding claims characterized in that one of the members comprises parts (12) enabling it to be coupled to the peripheral wall of a pot.

16. Container according to claim 15 characterized in that said coupling parts (12) preferably comprise outwardly deformable parts.

17. Container according to any one of claims 1 to 12 characterized in that one of said members (34) is an integral part of the peripheral wall of a pot.

18. Container according to any one of the preceding claims characterized in that it is shaped so that it can be molded in the folded position.

## Patentansprüche

1. Behälter, insbesondere Stütze für Pflanzen, umfassend wenigstens zwei koaxiale ringförmige Elemente (2, 3), die untereinander über Arme (5) verbunden sind, **dadurch gekennzeichnet,** daß die Arme an diesen Elementen derart mit Gelenken versehen sind, daß die genannten Elemente zwischen einer eingeklappten Position, in der sie einander benachbart sind, und einer ausgeklappten Position, in der sie voneinander beabstandet sind, gegeneinander koaxial verschiebbar sind, während die genannten Arme gleichzeitig die Ausrichtung verändern.

2. Behälter nach Anspruch 1, **dadurch gekennzeichnet,** daß die genannten Arme (5) wenigstens einen Teil umfassen und daß die axiale Verschiebung der genannten Elemente (2, 3) durch Schwenken der genannten Arme und gegenseitige Rotation der genannten Elemente erfolgt.

3. Behälter nach Anspruch 1, **dadurch gekennzeichnet,** daß die genannten Arme (36) wenigstens zwei Teile (37, 38) umfassen, die gelenkig miteinander verbunden sind, und daß die axiale Verschiebung der genannten Elemente (34, 35) gegeneinander durch Schwenken der genannten Arme und Translation der genannten Elemente erfolgt.

4. Behälter nach Anspruch 3, **dadurch gekennzeichnet,** daß die zuvor erwähnten Teile der genannten Arme über verformbare Verbindungsteile (41), die Gelenke darstellen, verbunden sind.

5. Behälter nach einem der vorhergehenden Ansprüche, **dadurch gekennzeichnet,** daß die genannten Elemente und die genannten Arme aus einem Stück bestehen und daß die genannten Arme und die genannten Element über verformbare Verbindungsteile, die Gelenke (7, 39, 41) darstellen, verbunden sind.

6. Behälter nach einem der vorhergehenden Ansprüche, **dadurch gekennzeichnet,** daß die genannten Elemente und die genannten Arme die gegenseitigen Halteteile (9, 29) aufweisen, die mitwirken, wenn die genannten Elemente in die zuvor genannte ausgeklappte Position gebracht werden.

7. Behälter nach einem der Ansprüche 3 bis 6, **dadurch gekennzeichnet,** daß die Teile der genannten Arme (36) die gegenseitigen Halteteile (43) aufweisen, die mitwirken, wenn die genannten Elemente in die zuvor genannte ausgeklappte Position gebracht werden.

8. Behälter nach einem der Ansprüche 6 oder 7, **dadurch gekennzeichnet,** daß die genannten Halteteile die aufgesetzten oder vorspringenden Teile (9, 29, 43) umfassen, die auf den genannten Elementen und/oder Armen ausgebildet sind.

9. Behälter nach Anspruch 7, **dadurch gekennzeichnet,** daß die genannten Halteteile die aufgesetzten oder vorspringenden Teile (43) umfassen, die auf wenigstens einem der genannten Teile der genannten Arme ausgebildet sind.

10. Behälter nach einem der Ansprüche 3 bis 9, **dadurch gekennzeichnet,** daß die genannten Elemente und die genannten Arme und/oder die genannten Teile der genannten Arme jeweils über die Drehachsen (11, 19, 41, 50) verbunden sind, die parallel zu den Ebenen der genannten Elemente und senkrecht zu diesen Elementen verlaufen und jeweils in der Nachbarschaft der genannten Gelenkachsen die aufgesetzten Teile (8, 9; 26, 29; 37, 43; 56, 60) umfassen, die parallel zu den Ebenen der genannten Elemente verlaufen und sich unter Druckanwendung übereinanderschieben, wenn die genannten Elemente und die genannten Arme und/oder die genannten Teile der genannten Arme von ihrer ausgeklappten Position in ihre eingeklappte Position und/oder umgekehrt gebracht werden, wobei die genannten aufgesetzten Teile Halteteile darstellen.

11. Behälter nach Anspruch 10, **dadurch gekennzeichnet,** daß die genannten aufgesetzten Teile (8, 9; 18, 20) jeweils senkrecht zu den genannten Gelenkachsen ausgebildet sind.

12. Behälter nach Anspruch 10, **dadurch gekennzeichnet,** daß die genannten aufgesetzten Teile (26, 29; 37, 43; 56, 60) jeweils senkrecht zu den genannten Drehachsen ausgebildet sind.

13. Behälter nach einem der vorhergehenden Ansprüche, **dadurch gekennzeichnet,** daß die genannten Element (2, 3) umeinander und beabstandet zueinander angeordnet sind und daß die genannten Arme (5) zwischen diesen Elementen verlaufen.

14. Behälter nach einem der vorhergehenden Ansprüche, **dadurch gekennzeichnet,** daß die genannten Elemente und die genannten Arme in der eingeklappten Position etwa in einer gleichen Ebene verlaufen.

15. Behälter nach einem der vorhergehenden Ansprüche, **dadurch gekennzeichnet,** daß eines der Elemente die Teile (12) umfaßt, die sein Anfügen an die umgebende Wandung eines Blumentopfes ermöglichen.

16. Behälter nach Anspruch 15, **dadurch gekennzeichnet,** daß die genannten Teile zum Anfügen die Teile (12) umfassen, die nach außen hin verformbar sind.

17. Behälter nach einem der vorhergehenden Ansprüche 1 bis 12, **dadurch gekennzeichnet,** daß eines der genannten Elemente (34) ein zu der umgebenden Wandung eines Blumentopfes dazugehöriger Teil ist.

18. Behälter nach einem der vorhergehenden Ansprüche, **dadurch gekennzeichnet,** daß er so geformt ist, daß er durch Formpressen hergestellt werden kann, wenn er sich in der eingeklappten Form befindet.
